# EUROPÄISCHE PATENTSCHRIFT

(11) **EP 0 303 273 B1**
(45) Veröffentlichungstag und Bekanntmachung des Hinweises auf die Patenterteilung: **14.04.1993**
(21) Anmeldenummer: 88113081.9
(22) Anmeldetag: 11.08.1988
(51) Int. Cl.: F16L 59/02, F16L 59/10, A44B 19/16, F16B 5/07

(54) **Verschlussband aus Kunststoff**
Locking band made of plastics
Ruban de fermeture en matière plastique

(30) Priorität: 13.08.1987 DE 3727031; 03.09.1987 DE 3729519; 15.10.1987 DE 3734993
(43) Veröffentlichungstag der Anmeldung: 15.02.1989
(73) Patentinhaber: ASF Verwaltungs-GmbH, D-90489 Nürnberg (DE)
(72) Erfinder: Siegel, Karl-Heinz, Dr., D-8500 Nürnberg (DE)
(74) Vertreter: Zinnecker, Armin, Dipl.-Ing.

(56) Entgegenhaltungen:
- DE-A- 3 339 652
- DE-A- 3 416 798
- DE-U- 8 427 762
- FR-A- 2 522 778
- GB-A- 841 142
- US-A- 4 372 014

## Beschreibung

Die Erfindung betrifft ein Verschlußband aus Kunststoff, nach dem Oberbegriff des Anspruchs 1.

Aus der DE-A-34 16 798 ist ein Verschlußband aus Kunststoff bekannt, das zwei Befestigungsstreifen mit je einem Verschlußrücken besitzt, an denen jeweils mindestens zwei mit mindestens einem Haken versehene Profilstege ausgebildet sind, die sich jeweils senkrecht zum Verschlußrücken erstrecken.

Das aus der DE-A-34 16 798 vorbekannte Verschlußband aus Kunststoff besitzt zwei Befestigungsstreifen mit je einem Verschlußrücken, an denen jeweils zwei mit einem Haken versehene Profilstege ausgebildet sind, die sich jeweils senkrecht zum zugehörigen Verschlußrücken erstrecken. Die Haken, die zu den beiden Stegen eines Verschlußrückens gehören, weisen dabei in dieselbe Richtung. Weiterhin sind beide Befestigungsstreifen jeweils am Ende eines hakenlosen Stützsteges angeordnet, der den jeweiligen Befestigungsstreifen mit dem jeweils zugehörigen Verschlußrücken verbindet. Dieser Stützsteg verläuft parallel zu den Profilstegen. Da die Profilstege eines Verschlußrückens im Abstand voneinander angeordnet sind und parallel zueinander verlaufen, begrenzen sie zwischen sich eine Profilnut, in die der Haken des äußeren Profilsteges hineinragt. Da der innere Profilsteg im Abstand vom und parallel zum Stützsteg angeordnet ist, wird durch den inneren Profilsteg und den Stützsteg ebenfalls eine Profilnut begrenzt, in die der Haken des inneren Profilstegs hineinragt. Zu jedem Verschlußrücken gehören also zwei Profilnuten. Das aus der DE-A-34 16 798 vorbekannte Verschlußband ist dann richtig verhakt, wenn die beiden zu einem Verschlußrücken gehörenden, mit jeweils einem Haken versehenen Profilstege in die soeben beschriebenen beiden Profilnuten, die zum anderen Verschlußrücken gehören, eingreifen und wenn sämtliche Haken miteinander verhaken. Es ist jedoch auch möglich, daß das Verschlußband falsch verhakt wird, weil die Bedienungsperson nicht sorgfältig arbeitet oder aber den Verhakungsvorgang nicht beobachten kann, sei es, daß dieser Vorgang im Dunkeln stattfindet, sei es, daß er an einer nicht von der Bedienungsperson einsehbaren Stelle stattfindet. Es ist nämlich möglich, den aus der DE-A-34 16 798 vorbekannten Verschluß in der Weise zu verhaken, daß die beiden äußeren Profilstege in Eingriff gelangen, nicht jedoch die beiden inneren, näher am Stützsteg und damit am Befestigungsstreifen liegenden Profilstege. Hierdurch wird die Haltekraft, die erforderlich ist, um den Verschluß gewaltsam zu lösen, im Vergleich zur richtigen, doppelten Verhakung halbiert; der Verschluß kann sich also unfreiwillig lösen.

Aus der DE-U-86 20 442 ist ein Verschlußband aus Kunststoff bekannt, das aus zwei Befestigungsstreifen mit je einem Verschlußrücken besteht, an denen zwei Profilstege ausgebildet sind, die sich jeweils senkrecht zum Verschlußrücken erstrecken. Der äußere, vom Befestigungsstreifen weiter entfernt liegende Profilsteg besitzt dabei zwei Haken, während der innere, näher am Befestigungsstreifen liegende Profilsteg einen Haken aufweist. Bei richtiger Verhakung tritt der jeweils äußere, mit zwei Haken versehene Profilsteg in die jeweils gegenüberliegende Nut zwischen den beiden Profilstegen, die zum anderen Verschlußrücken gehören. Bei dem in der Figur 4 dargestellten Ausführungsbeispiel der DE-U-86 20 442 ist neben der richtigen Verhakung auch eine falsche Verhakung möglich; dabei gelangt der jeweils innere Profilsteg in die Nut zwischen den beiden Profilstegen, die zum jeweils anderen Verschlußrücken gehören, so daß nur eine Verhakungsstelle wirksam wird und nicht - wie bei richtiger Verhakung - sämtliche drei Verhakungsstellen.

Ein Verschlußband aus Kunststoff nach dem Oberbegriff des Anspruchs 1 ist aus der DE-U-84 27 762 bekannt. Dort ist an der dem Haken abgewandten Seite eines Profilsteges eine im Bereich des Endes des Profilsteges angeordnete Verlängerung vorgesehen, die verhältnismäßig kurz ist und deren Querschnitt im wesentlichen dreieckförmig und sich nach außen verjüngend ausgestaltet ist. An der dieser Verlängerung gegenüberliegenden Seite des Verschlußbandes ist eine Führungsrippe vorgesehen, die das Erreichen der zur Verrastung notwendigen Stellung erleichtert, falls eine größere Toleranz der gegenseitigen Lage der Isolierwandränder zu erwarten ist. Ein falsches Verhaken wird durch die Verlängerung allerdings nicht verhindert.

Aufgabe der Erfindung ist es daher, ein Verschlußband nach dem Oberbegriff des Anspruchs 1 zu schaffen, das nur auf richtige Weise verschlossen werden kann, bei dem also ein falsches Verhaken verhindert wird.

Erfindungsgemäß wird diese Aufgabe durch die kennzeichnenden Merkmale des Anspruchs 1 gelöst. Der Querschnitt der Verlängerung ist länger als die kleinste Breite der Profilnut. Ferner weist der Querschnitt der Verlängerung eine im wesentlichen gleichmäßige Dicke auf. Wenn das Verschlußband richtig verhakt wird, liegt diese Verlängerung in einem Bereich, der von dem gegenüberliegenden Teil des Verschlußbandes freigelassen wird. Wenn jedoch versehentlich der äußere Profilsteg in die Profilnut zwischen den beiden Profilstegen des gegenüberliegenden Teil des Verschlußbandes eingeführt wird, verhindert die Verlängerung an der dem Haken abgewandten Seite des Profilsteges ein vollständiges Eindringen und Verhaken dieses Profilsteges in der gegenüberliegenden Profilnut. Das erfindungsgemäße Verschlußband kann also nur auf richtige Weise, nicht jedoch auf falsche Weise verhakt bzw. verschlossen werden. Damit ist eine zuverlässige Montage "nach Gefühl" auch im Dunkeln und an nicht einsehbaren Stellen gewährleistet.
Nach einer vorteilhaften Weiterbildung der Erfindung ist ein Befestigungsstreifen am Ende eines Stützsteges angeordnet, der diesen Befestigungsstreifen mit dem zugehörigen Verschlußrücken verbindet und parallel zu und in Richtung von den Profilstegen verläuft. Hierdurch wird ein Verhaken der jeweils inneren Profilstege verhindert.

Die Haken der Verschlußstege jedes Verschlußrückens können in dieselbe Richtung weisen. Weiterhin können die Haken hinterschnitten sein. Die Hinterschneidungen können schräg verlaufen.

Nach einer weiteren vorteilhaften Weiterbildung der Erfindung fluchten die Befestigungsstreifen im verhakten Zustand des Verschlußbandes miteinander. Hierdurch wird erreicht, daß kein ein unbeabsichtigtes Öffnen unterstützendes bzw. auslösendes Drehmoment in den verhakten Verschluß eingeleitet wird.

An einem Verschlußrücken oder Profilsteg kann ein aus der DE-A-34 16 798 an sich bekannter Aufreißstreifen angeordnet sein.

Eine weitere vorteilhafte Weiterbildung ist dadurch gekennzeichnet, daß an der dem Haken abgewandten Seite eines jeden äußeren Profilsteges eine Verlängerung vorgesehen ist.

In einer vorteilhaften Weiterbildung der Erfindung weist ein derartiges Verschlußband verkürzte Stützstege sowie zwischen diesen und den Befestigungsstreifen schräg verlaufende Übergangsbereiche auf, wobei die Verlängerungen zu diesen Übergangsbereichen parallel verlaufen. Hierdurch ist erreicht, daß im wesentlichen kein ein unbeabsichtigtes Öffnen unterstützendes bzw. auslösendes Drehmoment in den verhakten Verschluß eingeleitet wird.

Eine weitere vorteilhafte Weiterbildung ist dadurch gekennzeichnet, daß die jeweiligen Haken des inneren Steges waagerecht oder einen geringen stumpfen Winkel einschließend ausgebildet sind. Um ein Überhaken zu vermeiden, kann also der jeweilige Haken des inneren Steges nicht hinterschnitten, sondern waagrecht bzw. einen geringen stumpfen Winkel einschließend ausgebildet sein. Hierdurch kann es zwar möglich sein, daß unter Umständen ein geringes Überhaken zustandekommt. Wenn jedoch die beiden Verschlußbänder überhakt werden, wenn also die Haken der beiden inneren Stege ineinandergreifen, gleiten die beiden waagrechten bzw. mit einem geringen stumpfen Winkel ausgestatteten Flächen der jeweiligen Haken des inneren Steges (Mittelhaken) aneinander ab. Die Verhakung wird also nicht zu einem fehlerhaften Schließen führen, da sich die Verhakung sofort wieder löst, so daß die Bedienungsperson erkennt, daß sie falsch verhakt hat.

Eine weitere vorteilhafte Weiterbildung ist dadurch gekennzeichnet, daß der der Verlängerung gegenüberliegende Stützsteg annähernd so lang wie die Profilstege ausgebildet ist, wobei der Abstand zwischen diesem Stützsteg und dem anschließenden inneren Profilsteg so groß ist, daß der die Verlängerung tragende, gegenüberliegende Profilsteg fehlerfrei einrasten kann. Der betreffende Stützsteg ist also stark nach oben verlängert. Der Abstand zwischen diesem Stützsteg und dem zu demselben Verschlußband gehörenden, anschließenden Profilsteg ist so groß, daß die Verlängerung des gegenüberliegenden, äußeren Profilsteges zusammen mit dem zugehörigen Haken dieses Profilsteges bequem in die von dem Stützsteg und dem anschließenden, inneren Profilsteg gebildete Profilnut einrasten kann. Diese Ausgestaltung dient dazu, ein Überhaken zu vermeiden, also ein Verhaken der beiden jeweiligen inneren Profilstege.

Ausführungsbeispiele der Erfindung werden nachstehend anhand der beigefügten Zeichnung im einzelnen erläutert. In der Zeichnung zeigt
- Fig. 1: einen Querschnitt durch zwei Verschlußbänder, deren Verschlüsse miteinander verhakt sind, in einer ersten Ausführungsform,
- Fig. 2: einen Querschnitt durch zwei verhakte Verschlußbän der einer zweiten Ausführungsform,
- Fig. 3: eine perspektivische Darstellung der in Fig. 2 gezeigten Ausführungsform im geöffneten Zustand an einer wärmeisolierenden Rohrverkleidung,
- Fig. 4: das in Figur 2 gezeigte Ausführungsbeispiel mit einem Aufreißstreifen,
- Fig. 5: einen Querschnitt durch zwei Verschlußbänder, deren Verschlüsse miteinander verhakt sind, in einer dritten Ausführungsform,
- Fig. 6: einen Querschnitt durch zwei verhakte Verschlußbänder in einer vierten Ausführungsform,
- Fig. 7: eine perspektivische Darstellung der in Fig. 5 gezeigten Ausführungsform im geöffneten Zustand an einer wärmeisolierenden Rohrverkleidung,
- Fig. 8: ein weiteres Ausführungsbeispiel und
- Fig. 9: ein weiteres Ausführungsbeispiel.

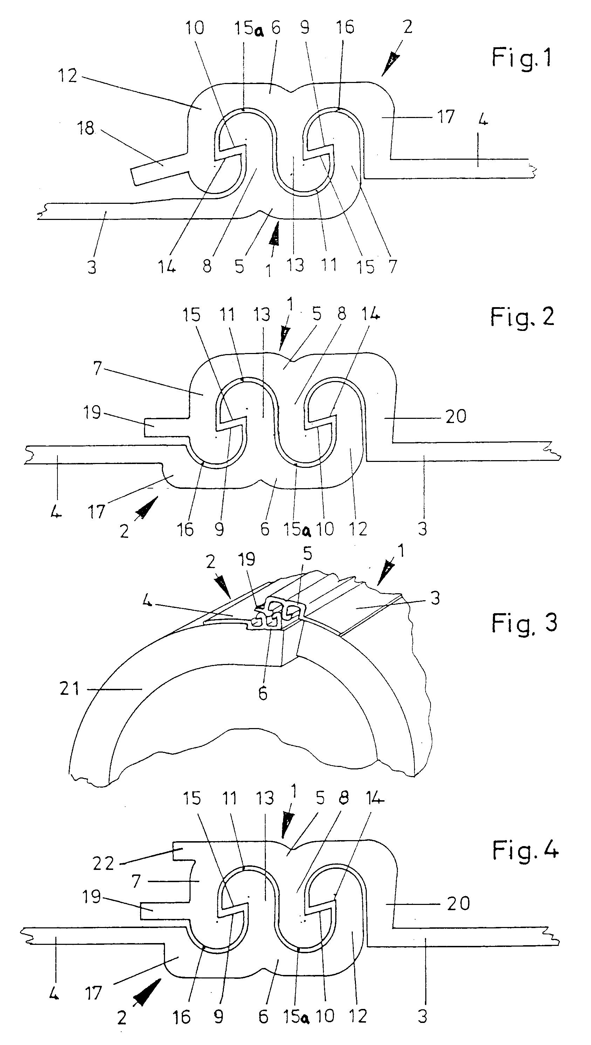

Die in Figur 1 dargestellten Verschlußbänder 1, 2 aus Kunststoff bestehen jeweils aus einem Befestigungsstreifen 3, 4 und je einem Verschlußrücken 5, 6. Senkrecht zum Verschlußrücken 5 erstrecken sich der äußere Profilsteg 7 und der innere Profilsteg 8, die jeweils mit einem Haken 9, 10 versehen sind. Die Profilstege 7 und 8 verlaufen im Abstand voneinander und parallel zueinander, so daß sie zwischen sich die Profilnut 11 begrenzen, in die der Haken 9 des äußeren Profilstegs 7 eingreift. Senkrecht zum Verschlußrücken 6 verlaufen der äußere Profilsteg 12 und der innere Profilsteg 13, die jeweils mit einem Haken 14, 15 versehen sind. Die beiden Profilstege 12 und 13 verlaufen im Abstand voneinander und parallel zueinander, so daß sie zwischen sich die Profilnut 15a begrenzen, in die der Haken 10 des inneren Profilstegs 8 eingreift.

In der Figur 1 sind die beiden Verschlußbänder 1 und 2 richtig miteinander verhakt. Der äußere, dem Befestigungsstreifen 3 abgewandte Profilsteg 7 des Verschlußbandes 1 befindet sich in der Profilnut 16 zwischen dem inneren, näher am Befestigungsstreifen 4 des Verschlußbandes 2 liegenden Profilsteg 13 und dem Stützsteg 17, der den Befestigungsstreifen 4 mit dem Verschlußrücken 6 des Verschlußbandes 2 verbindet und der parallel zu den Profilstegen 12, 13 dieses Verschlußbandes 2 verläuft. Der Haken 9 des äußeren Profilstegs 7 des ersten Verschlußbandes 1 verhakt dabei mit dem Haken 15 des inneren Profilstegs 13 des zweiten Verschlußbandes 2, während der Haken 10 des inneren Profilstegs 8 des ersten Verschlußbandes 1 mit dem Haken 14 des äußeren Profilstegs 12 des zweiten Verschlußbandes 2 verhakt. Bei richtigem Verschließen gelangt also der Haken eines äußeren Profilsteges mit dem gegenüberliegende Haken eines inneren Profilsteges in Eingriff.

Bei dem in Figur 1 dargestellten Ausführungsbeispiel ist eine falsche Verbindung nicht möglich. Zum einen könnte eine derartige falsche Verbindung dadurch herbeigeführt werden daß der äußere Profilsteg 7 des ersten Verschlußbandes 1 in die Profilnut 15azwischen den beiden Profilstegen 12 und 13 des zweiten Verschlußbandes 2 gelangt. Wenn dies jedoch versucht wird, stößt das Ende des inneren Profilstegs 8 des ersten Verschlußbandes 1 an die Verlängerung 18, die an der dem Haken 14 abgewandten Seite des äußeren Profilsteges 12 des zweiten Verschlußbandes 2 vorgesehen ist. Es ist also nicht möglich, den äußeren Profilsteg 7 in die Profilnut 15a einzuführen; eine falsche Verhakung ist ausgeschlossen.

Zum anderen könnte das in Figur 1 dargestellte Verschlußband dadurch falsch verhakt werden, daß der innere Profilsteg 8 des ersten Verschlußbandes 1 in die Profilnut 16 zwischen dem inneren Profilsteg 13 und dem Stützsteg 17 eingeführt wird. Dieses Einführen ist jedoch deshalb nicht möglich, weil dann der äußere Profilsteg 7 des ersten Verschlußbandes 1 an den Befestigungsstreifen 4 des zweiten Verschlußbandes 2 stößt. Dieser Befestigungsstreifen 4 verläuft im Abstand vom und parallel zum Verschlußrücken 6 des zweiten Verschlußbandes 2; der Abstand wird durch den Stützsteg 17 vermittelt. Da dieser Stützsteg 17 parallel zu den Profilstegen 12 und 13 desselben Verschlußbandes 2 verläuft und gleichzeitig in Richtung von diesen Profilstegen 12 und 13 verläuft, befindet sich der Befestigungsstreifen 4 in einer die Bewegung des Profilstegs 7 verhindernden Lage. Der in Figur 1 dargestellte Verschluß kann also nur auf richtige Weise geschlossen werden.

Die Figur 2 zeigt ein weiteres Ausführungsbeispiel der Erfindung, bei der identische Teile mit gleichen Bezugsziffern versehen sind, so daß sie nicht erneut im einzelnen beschrieben werden müssen. Im Gegensatz zum Ausführungsbeispiel nach Figur 1 befindet sich bei demjenigen nach Figur 2 am äußeren Profilsteg 12 des zweiten Verschlußbandes 2 keine Verlängerung. Eine derartige Verlängerung 19 ist jedoch am äußeren Profilsteg 7 des ersten Verschlußbandes 1 vorgesehen. Diese Verlängerung 19 verläuft senkrecht zu den Profilstegen 7 und 8 und parallel zum Befestigungssteifen 3. Sie liegt etwa in Höhe der Haken 9, 10. Bei der in Figur 2 dargestellten, richtigen Verhakung befindet sich die Verlängerung 19 in der Nähe des Befestigungsstreifens 4 des zweiten Verschlußbandes 2. Dieser Befestigungsstreifen 4 ist am Ende eines Stützsteges 17 angeordnet, der diesen Befestigungsstreifen 4 mit dem zugehörigen Verschlußrücken 6 des zweiten Verschlußbandes 2 verbindet und parallel zu und in Richtung von den Profilstegen 12 und 13 des zweiten Verschlußbandes 2 verläuft. Allerdings ist der Stützsteg 17 in der Figur 2 kürzer als in der Figur 1.

Der Befestigungsstreifen 3 des ersten Verschlußbandes 1 ist ebenfalls am Ende eines Stützsteges 20 angeordnet, der diesen Befestigungsstreifen 3 mit dem zugehörigen Verschlußrücken 5 des ersten Verschlußbandes 1 verbindet und parallel zu und in Richtung von den Profilstegen 7 und 8 des ersten Verschlußbandes 1 verläuft. Auch bei dem in Figur 2 dargestellten Ausführungsbeispiel ist eine falsche Verbindung der beiden Verschlußbänder 1 und 2 nicht möglich. Zum einen kann der Profilsteg 7 des ersten Verschlußbandes 1 nicht in die Nut 15a zwischen den beiden Profilstegen 12 und 13 des zweiten Verschlußbandes 2 eingeschoben werden, weil dies durch die Verlängerung 19 an der dem haken 9 abgewandten Seite des äußeren Profilstegen 7 des ersten Verschlußbandes 1 verhindert wird. Diese Verlängerung 19 stößt an das Ende des inneren Profilstegs 13 des zweiten Verschlußbandes 2 an, bevor eine Verhakung des Hakens 9 des äußeren Profilstegs 7 des ersten Verschlußbandes 1 mit dem Haken 14 des äußeren Profilstegs 12 des zweiten Verschlußbandes 2 erfolgen kann.

Zum anderen kann auch der innere Profilsteg 8 des ersten Verschlußbandes 1 nicht in die Profilnut 16 zwischen dem inneren Profilsteg 13 und dem Stützsteg 17 des zweiten Verschlußbandes 2 gelangen. Diese Bewegung wird durch den Befestigungsstreifen 3 des ersten Verschlußbandes 1 verhindert, der vor der Verhakung an das Ende des äußeren Profilstegs 12 des zweiten Verschlußbandes 2 stößt. Auch der in Figur 2 dargestellte Verschluß kann daher stets nur richtig verschlossen werden.

Die Haken 9 und 10 der Profilstege 7 und 8 des ersten Verschlußbandes 1 weisen in dieselbe Richtung. In gleicher Weise weisen die Haken 14 und 15 der Profilstege 12 und 13 des zweiten Verschlußbandes 2 in dieselbe Richtung. Sämtliche Haken sind hinterschnitten, wobei die Hinterschneidungen schräg verlaufen. Weiterhin fluchten die Befestigungsstreifen 3 und 4 im verhakten Zustand der Verschlußbänder 1 und 2 miteinander. In dem in Figur 1 dargestellten Ausführungsbeispiel besteht noch ein geringer Abstand zwischen den parallel verlaufenden Befestigungsstreifen 3 und 4, so daß diese nicht exakt miteinander fluchten. Bei der in Figur 2 dargestellten Lösung ist jedoch ein exaktes Fluchten der beiden Befestigungsstreifen 3 und 4 möglich, so daß kein Drehmoment in den Verschluß eingeleitet wird, daß ein unbeabsichtigtes Öffnen hervorrufen oder unterstützen könnte.

Die Figur 3 zeigt den in Figur 2 dargestellten Verschluß in Verbindung mit einem wärmeisolierenden Rohrverkleidung 21. Gleiche Teile sind wieder mit gleichen Bezugsziffern versehen. In der Figur 3 wird gezeigt, daß eine falsche Verhakung nicht möglich ist. Der äußere Profilsteg 7 des ersten Verschlußbandes 1 kann deshalb nicht in die Profilnut 15a zwischen den beiden Profilstegen 12 und 13 des zweiten Verschlußbandes 2 eindringen, weil die Verlängerung 19, die an der am Haken 9 abgewandten Seite des äußeren Profilstegs 7 des ersten Verschlußbandes 1 vorgesehen ist, am oberen Ende des inneren Profilstegs 13 des zweiten Verschlußbandes 2 anliegt und ein weiteres Eindringen und damit Verhaken des Profilstegs 7 verhindert.

Die Figur 4 zeigt den in der Figur 2 dargestellten Verschluß mit einem zusätzlichen Aufreißstreifen 22. Gleiche Teile sind wieder mit gleichen Bezugsziffern versehen. Der Aufreißstreifen 22 verläuft in Verlängerung des Verschlußrückens 5.

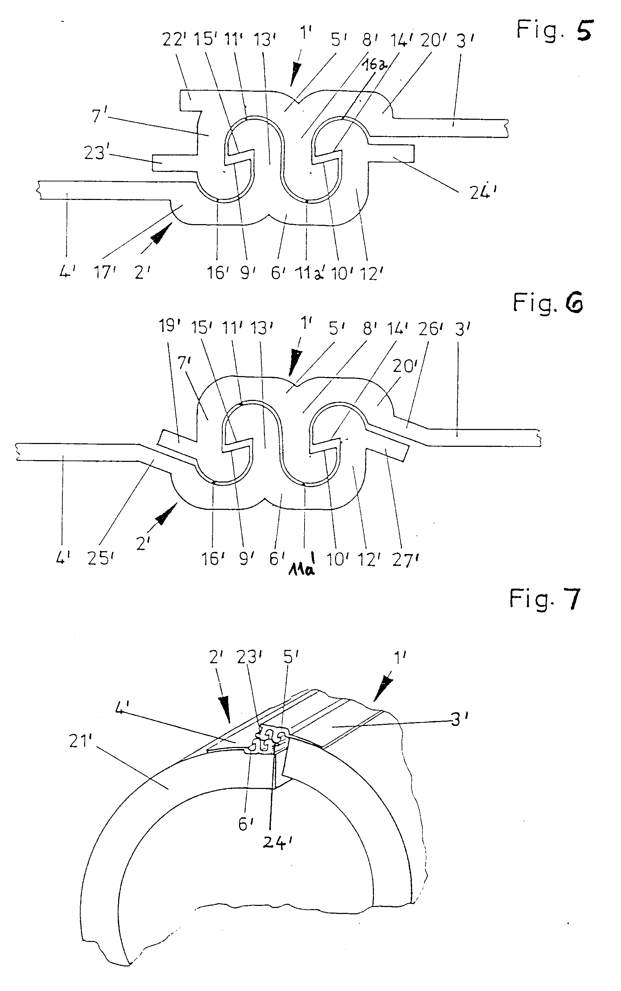

In der Fig. 5 ist ein drittes Ausführungsbeispiel gezeigt. Die in dieser Figur dargestellten Verschlußbänder 1′, 2′ aus Kunststoff bestehen jeweils aus einem Befestigungsstreifen 3′, 4′ und je einem Verschlußrücken 5′, 6′. Senkrecht zum Verschlußrücken 5′ erstrecken sich der äußere Profilsteg 7′ und der innere Profilsteg 8′, die jeweils mit einem Haken 9′, 10′ versehen sind. Die Profilstege 7′ und 8′ verlaufen im Abstand voneinander und parallel zueinander, so daß sie zwischen sich eine Profilnut 11′ begrenzen, in die der Haken 15′ des inneren Profilsteges 13′ eingreift. Senkrecht zum Verschlußrücken 6′ verlaufen der äußere Profilsteg 12′ und der innere Profilsteg 13′, die jeweils mit einem Haken 14′, 15′ versehen sind. Die beiden Profilstege 12′, 13′ verlaufen im Abstand voneinander und parallel zueinander, so daß sie zwischen sich eine Profilnut 11a′ begrenzen, in die der Haken 10′ des inneren Profilstegs 8′ eingreift.

In der Fig. 5 sind die beiden Verschlußbänder 1′ und 2′ richtig miteinander verhakt. Der äußere, dem Befestigungsstreifen 3′ abgewandte Profilsteg 7′ des Verschlußbandes 1′ befindet sich in der Profilnut 16′ zwischen dem inneren, näher am Befestigungsstreifen 3′ des Verschlußbandes 1′ liegenden inneren Profilsteg 13′ und einem kurzen Stützsteg 17′, der den Befestigungsstreifen 4′ mit dem Verschlußrücken 6′ des Verschlußbandes 2′ verbindet. Der Haken 9′ des äußeren Profilsteges 7′ des ersten Verschlußbandes 1′ verhakt dabei mit dem Haken 15′ des inneren Profilsteges 13′ des zweiten Verschlußbandes 2′, während der Haken 10′ des inneren Profilsteges 8′ des ersten Verschlußbandes 1′ mit dem Haken 14′ des äußeren Profilsteges 12′ des zweiten Verschlußbandes 2′ verhakt. Bei richtigem Verschließen gelangt also der Haken eines äußeren Profilsteges mit dem gegenüberliegenden Haken eines inneren Profilsteges in Eingriff.

Bei dem in Fig. 5 dargestellten Ausführungsbeispiel ist eine falsche Verbindung der beiden Verschlußbänder 1′, 2′ nicht möglich. Zum einen könnte eine derartige falsche Verbindung dadurch herbeigeführt werden, daö der äußere Profilsteg 7′ des ersten Verschlußbandes 1′ in die Profilnut 11a′ zwischen die beiden Profilstege 12′ und 13′ des zweiten Verschlußbandes 2′ gelangt. Wenn dies jedoch versucht wird, stößt der Kopt fes inneren Profilsteges 13′ des Verschlußbandes 2′ an die Verlängerung 23′, die an der dem Haken 9′ abgewandten Seite des äußeren Profilsteges 7′ des Verschlußbandes vorgesehen ist. Gleichzeitig stößt der Kopt des Profilsteges 12′ an die Verlängerung 24′ des äußeren Profilsteges 12′. Es ist also nicht möglich, den äußeren Profilsteg 7′ in die Profilnut 11a′ einzuführen; eine falsche Verhakung ist vielmehr ausgeschlossen.

Dadurch, daß erfindungsgemäß an der dem Haken abgewandten Seite eines jeden äußeren Profilsteges eine Verlängerung vorgesehen ist, vermittelt das in der Fig. 5 gezeigte, dritte Ausführungsbeispiel den Vorteil, daß der Stützsteg 17′ im Vergleich zu den beiden ersten Ausführungsbeispielen kurz gehalten werden kann, weil die zweite Verlängerung die Funktion des bei den beiden ersten Ausführungsbeispielen an den Stützsteg 17′ angesetzten Befestigungsstreifens übernimmt.

Die Fig. 6 führt zu einer weiteren Verbesserung dieses Vorteils eines erfindungsgemäßen Verschlußbandes. Diese Ausführungsform unterscheidet sich von derjenigen nach Fig. 5 dadurch, daß die Ebenen, in welchen die Verschlußbänder 3′, 4′ angeordnet sind, im Vergleich zu Fig. 1 - 4 einander nähergerückt sind. Erreicht ist dies durch die Übergangsabschnitte 25′, 26′. Diesen sind die Verlängerungen 19′, 27′ angepaßt, wie im Patentanspruch 9 gekennzeichnet und aus Fig. 6 ohne weiteres ersichtlich. Die Anordnung ist derart getroffen, daß die beiden Befestigungsstreifen 3′, 4′ miteinander fluchten, so daß eine Einleitung eines ein unbeabsichtigtes Öffnen unterstützenden bzw. auslösenden Drehmoments in dem verhakten Verschluß ausgeschlossen ist.

Die Verlängerungen 23′, 24′ bzw. 19′, 27′ können breiter, stärker gekrümmt und beliebig anders als zeichnerisch dargestellt ausgeführt sowie positioniert sein, solange sie auf dem dargelegten Wege die Aufgabe lösen, ein falsches Verhaken zu verhindern.

Es ist ein Vorteil dieser Ausführungsform, daß ein Drehmoment dadurch verhindert wird, daß die Befestigungsstreifen 3′, 4′ im wesentlichen miteinander fluchten.

Die Fig. 7 zeigt den in Fig. 5 dargestellten Verschluß in Verbindung mit einer wärmeisolierenden Rohrverkleidung 21′. Auch hier ist gezeigt, daß eine falsche Verhakung nicht möglich ist. Der äußere Profilsteg 7′ des ersten Verschlußbandes 1′ kann deshalb nicht in die Profilnut 11a′ zwischen den beiden Profilstegen 12′, 13′ des zweiten Verschlußbandes 2′ eindringen, weil die Verlängerung 23′, die an der dem Haken 9′ abgewandten Seite des äußeren Profilsteges 7′ des ersten Verschlußbandes 1′ vorgesehen ist, am Kopf des inneren Profilsteges 13′ des zweiten Verschlußbandes 2′ anliegt sowie der Kopf des Profilsteges 8′ an die Verlängerung 24′ des Profilsteges 12′ anstößt und ein weiteres Eindringen und damit Verhaken des Profilsteges 7′ verhindert.

Es ist vorteilhaft, die wärmeisolierende Rohrverkleidung 21′ der Fig. 7 auf der anderen Seite der Verschlußbänder vorzusehen. Bei den in Fig. 5 dargestellten Verschlußbändern würde die Rohrverkleidung 21′ also oben angeordnet sein, also im Anschluß an den Verschlußrücken 5′ des Befestigungsstreifens 3′. In diesem Fall wirkt die Verlängerung 22′ als Mittel, um einer Kippbewegung des Verschlusses entgegenzuwirken. Diese Verlängerung 22′ liegt dann nämlich zu unterst auf dem Schaumstoff der Rohrverkleidung 21′ auf und wirkt der Kippbewegung entgegen. Als Aufreißlasche dient dann die Verlängerung 24′, die gleichzeitig das falsche Einrasten des Verschlusses verhindert.

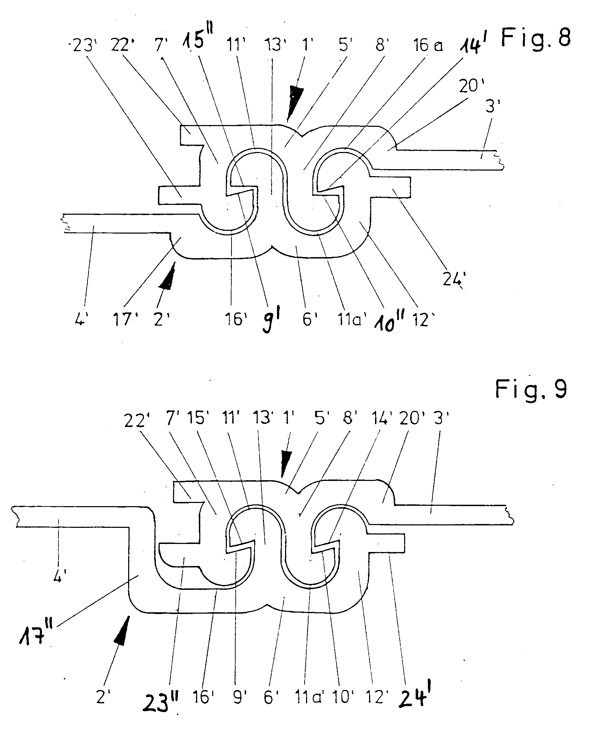

Die Fig. 8 zeigt ein weiteres Ausführungsbeispiel, das im wesentlichen demjenigen der Fig. 5 entspricht, bei dem also die Bezugszeichen ebenfalls denjenigen der Fig. 5 entsprechen. Bei dem in Fig. 8 gezeigten Beispiel sind die jeweiligen Haken 15˝, 10˝ der inneren Profilstege 13′, 8′ waagerecht ausgebildet. Anstelle der waagerechten Ausgestaltung wäre es auch möglich, daß die Haken 15˝, 10˝ einen geringen stumpfen Winkel einschließen würden. Diese Ausgestaltung dient dazu, ein Überhaken, also ein Verhaken der jeweils inneren Profilstege zu verhindern. Wenn versehentlich die beiden inneren Profilstege 13′, 8′ verhakt werden, gelangen die waagerechten Haken 15˝, 10˝ in Eingriff. Diese beiden Haken gleiten dann aneinander ab, so daß eine falsche Verhakung nicht möglich ist, sondern durch dieses Abgleiten sofort entdeckt wird. Wenn sämtliche Haken, wie in Fig. 8 dargestellt, richtig verhakt sind, wird trotz der waagerechten Ausgestaltung der Haken 15˝, 10˝ eine zuverlässige Verhakung gewährleistet.

Ein weiteres Ausführungsbeispiel ist in der Fig. 9 gezeigt. Die Fig. 9 entspricht im wesentlichen der Fig. 5, weshalb auch die Bezugszeichen der Fig. 9 mit denjenigen der Fig. 5 übereinstimmen. In Abänderung zur Fig. 5 ist beim Ausführungsbeispiel der Fig. 9 der der Verlängerung 23˝ gegenüberliegende Stützsteg 17˝ annähernd so lang wie die Profilstege ausgebildet, wobei der Abstand zwischen diesem Stützsteg 17˝ und dem anschließenden inneren Profilsteg 13′ so groß ist, daß der die Verlängerung 23˝ tragende, gegenüberliegende Profilsteg 7′ fehlerfrei einrasten kann. Das äußere Ende der Verlängerung 23˝ liegt also in der Nähe des Stützsteges 17˝. Dieses äußere Ende der Verlängerung 23˝ ist darüberhinaus abgerundet, um ein zuverlässsiges Einhaken zu erleichtern. Die Länge des Stützsteges 17˝ ist derart gewählt, daß der Befestigungsstreifen 4′ mit dem Befestigungsstreifen 3′ fluchtet. Durch die Verlängerung des Stützsteges 17˝ wird ein Überhaken, also ein Verhaken der inneren Profilstege, mit noch größerer Sicherheit verhindert. Um gleichzeitig eine richtige Verhakung zu ermöglichen, ist der Abstand zwischen dem Stützsteg 17˝ und dem anschließenden inneren Profilsteg 13′ entsprechend vergrößert.

## Patentansprüche

1. Verschlußband aus Kunststoff, bestehend aus zwei Befestigungsstreifen (3, 4) mit je einem Verschlußrücken (5, 6), an denen jeweils mindestens zwei mit mindestens einem endseitigen Haken (9, 14) versehene Profilstege (7, 12) ausgebildet sind, die sich jeweils senkrecht zum Verschlußrücken erstrecken und die zwischen sich eine Profilnut (11; 15a) begrenzen, wobei an der dem Haken (14; 9) abgewandten Seite eines Profilsteges (12; 7) eine im Bereich des Endes des Profilsteges (12; 7) angeordnete Verlängerung (18; 19) vorgesehen ist,
dadurch gekennzeichnet,
daß der Querschnitt der Verlängerung (18; 19) länger ist als die kleinste Breite der Profilnut (11; 15a)
und daß der Querschnitt der Verlängerung (18; 19) eine gleichmäßige Dicke aufweist.

2. Verschlußband nach Anspruch 1, dadurch gekennzeichnet, daß ein Befestigungsstreifen (4; 4, 3) am Ende eines Stützsteges (17; 17, 20) angeordnet ist, der diesen Befestigungsstreifen mit dem zugehörigen Verschlußrücken (6; 6, 5) verbindet und parallel zu und in Richtung von den Profilstegen (12, 13; 12, 13, 7, 8) verläuft.

3. Verschlußband nach Anspruch 1 oder 2, dadurch gekennzeichnet, daß die Haken (9, 10; 14, 15) der Profilstege (7, 8; 12, 13) jedes Verschlußrückens (5; 6) in dieselbe Richtung weisen.

4. Verschlußband nach einem der vorhergehenden Ansprüche, dadurch gekennzeichnet, daß die Haken (9, 10, 14, 15) hinterschnitten sind.

5. Verschlußband nach Anspruch 4, dadurch gekennzeichnet, daß die Hinterschneidungen schräg verlaufen.

6. Verschlußband nach einem der vorhergehenden Ansprüche, dadurch gekennzeichnet, daß die Befestigungsstreifen (3, 4) im verhakten Zustand des Verschlußbandes miteinander fluchten.

7. Verschlußband nach einem der vorhergehenden Ansprüche, dadurch gekennzeichnet, daß an einem Verschlußrücken oder Profilsteg ein Aufreißstreifen (22) angeordnet ist.

8. Verschlußband nach einem der vorhergehenden Ansprüche, dadurch gekennzeichnet, daß an der dem Haken (14′; 9′) abgewandten Seite eines jeden äußeren Profilsteges (12′, 7′) eine Verlängerung (23′, 24′ bzw. 19′, 27′) vorgesehen ist.

9. Verschlußband nach Anspruch 8, gekennzeichnet durch kurze Stützstege (17′, 20′), an diesen anschließende, schräg verlaufende Übergangsbereiche (25′, 26′) zu den Befestigungsstreifen (3′, 4′) und zu diesen parallel verlaufende Verlängerungen (19′, 27′).

10. Verschlußband nach einem der vorhergehenden Ansprüche, dadurch gekennzeichnet, daß die jeweiligen Haken (15˝, 10˝) der inneren Profilstege (13′, 8′) waagrecht oder einen geringen stumpfen Winkel einschließend ausgebildet sind (Fig. 8).

11. Verschlußband nach einem der vorhergehenden Ansprüche, dadurch gekennzeichnet, daß der der Verlängerung (23˝) gegenüberliegende Stützsteg (17˝) annähernd so lang wie die Profilstege ausgebildet ist, wobei der Abstand zwischen diesem Stützsteg (17˝) und dem anschließenden inneren Profilsteg (13′) so groß ist, daß der die Verlängerung (23˝) tragende, gegenüberliegende Profilsteg (7′) fehlerfrei einrasten kann (Fig. 9).

## Claims

1. Plastic closure tape consisting of two fastening strips (3, 4) having in each case a closure spine (5, 6) on which in each case at least two profile webs (7, 12) are formed, provided with at least one end hook (9, 14), which profile webs extend in each case perpendicularly with respect to the closure spine and which delimit between them a profile groove (11; 15a), an extension (18; 19) disposed in the region of the end of the profile web (12;7) being provided on that side of a profile web (12; 7) directed away from the hook (14; 9), characterised in that the cross-section of the extension (18; 19) is longer than the smallest width of the profile groove (11; 15a) and in that the cross-section of the extension (18; 19) has a uniform thickness.

2. Closure tape according to Claim 1, characterised in that a fastening strip (4; 4, 3) is disposed at the end of a supporting web (17; 17, 20) which joins this fastening strip to the associated closure spine (6; 6, 5) and extends parallel to and in the direction of the profile webs (12, 13; 12, 13, 7, 8).

3. Closure tape according to Claim 1 or 2, characterised in that the hooks (9, 10; 14, 15) of the profile webs (7, 8; 12, 13) of each closure spine (5; 6) face in the same direction.

4. Closure tape according to one of the preceding claims, characterised in that the hooks (9, 10, 14, 15) are undercut.

5. Closure tape according to Claim 4, characterised in that the undercuts extend in an inclined manner.

6. Closure tape according to one of the preceding claims, characterised in that the fastening strips (3, 4) are flush with one another when the closure tape is in the hooked state.

7. Closure tape according to one of the preceding claims, characterised in that a tear-open strip (22) is disposed on a closure spine or profile web.

8. Closure tape according to one of the preceding claims, characterised in that an extension (23', 24' and 19', 27') is provided on that side of each outer profile web (12', 7') directed away from the hook (14'; 9').

9. Closure tape according to Claim 8, characterised by short supporting webs (17', 20'), transition regions (25', 26') to the fastening strips (3', 4'), extending in an inclined manner and connecting with the supporting webs, and extensions (19', 27') extending parallel to these fastening strips.

10. Closure tape according to one of the preceding claims, characterised in that the respective hooks (15'', 10'') of the inner profile webs (13', 8') are designed so as to be horizontal or so as to include a small obtuse angle (Fig. 8).

11. Closure tape according to one of the preceding claims, characterised in that the supporting web (17'') opposite to the extension (23'') is designed so as to be approximately as long as the profile webs, the distance between this supporting web (17'') and the contiguous inner profile web (13') being of a size such that the opposite profile web (7') carrying the extension (23'') can faultlessly repose therein (Fig. 9).

## Revendications

1. Ruban de fermeture en matière plastique comprenant deux bandes de fixation (3, 4) dont chacune présente un dos de fermeture (5, 6), sur lesquelles sont réalisées à chaque fois au moins deux âmes profilées (7, 12) pourvues d'au moins un crochet côté extrême (9, 14), qui s'étendent respectivement perpendiculairement au dos de fermeture et qui délimitent entre elles une rainure profilée (11 ; 15a), sur le côté d'une âme profilée (12 ; 7) éloignée du crochet (14 ; 9) étant prévu un prolongement (18 ; 19) disposé au voisinage de l'extrémité de l'âme profilée (12 ; 7),
caractérisé
en ce que la section transversale du prolongement (18 ; 19) est plus longue que la plus petite largeur de la rainure profilée (11 ; 15a) et que la section transversale du prolongement (18 ; 19) présente une épaisseur uniforme.

2. Ruban de fermeture selon la revendication 1, caractérisé en ce qu'une bande de fixation (4 ; 4, 3) est disposée à l'extrémité d'une âme d'appui (17 ; 17, 20) qui relie cette bande de fixation au dos de fermeture associé (6 ; 6, 5) et s'étend parallèlement à et dans la direction des âmes profilées (12, 13 ; 12, 13, 7, 8).

3. Ruban de fermeture selon la revendication 1 ou 2, caractérisé en ce que les crochets (9, 10 ; 14, 15) des âmes profilées (7, 8 ; 12, 13) de chaque dos de fermeture (5 ; 6) sont orientés suivant la même direction.

4. Ruban de fermeture selon l'une des revendications précédentes, caractérisé en ce que les crochets (9, 10, 14, 15) sont réalisés en contredépouille.

5. Ruban de fermeture selon la revendication 4, caractérisé en ce que les contre-dépouilles s'étendent de manière oblique.

6. Ruban de fermeture selon l'une des revendications précédentes, caractérisé en ce que les bandes de fixation (3, 4) sont alignées les unes aux autres dans l'état d'accrochage du ruban de fermeture.

7. Ruban de fermeture selon l'une des revendications précédentes, caractérisé en ce qu'une bande d'arrachage (22) est disposée sur un dos de fermeture ou une âme profilée.

8. Ruban de fermeture selon l'une des revendications précédentes, caractérisé en ce qu'il est prévu sur le côté éloigné du crochet (14' ; 9') de chaque âme profilée externe (12', 7') un prolongement (23', 24' et 19', 27') respectivement.

9. Ruban de fermeture selon la revendication 8, caractérisé par des âmes de support (17', 20') courtes, par des zones de transition (25', 26') faisant suite à celles-ci et s'étendant de manière oblique vers les bandes de fixation (3', 4') et par des prolongements (19', 27') s'étendant parallèlement à celles-ci.

10. Ruban de fermeture selon l'une des revendications précédentes, caractérisé en ce que les crochets respectifs (15", 10") des âmes profilées internes (13', 8') sont réalisées horizontalement ou de manière à former un petit angle obtus (figure 8).

11. Ruban de fermeture selon l'une des revendications précédentes, caractérisé en ce que l'âme de support (17") opposée au prolongement (23") est à peu près aussi longue que les âmes profilées, l'écart entre cette âme de support (17") et l'âme profilée interne (13') qui fait suite étant suffisamment grand pour que l'âme profilée (7') opposée, supportant le prolongement (23") puisse s'enclencher correctement (figure 9).
